# EUROPÄISCHE PATENTSCHRIFT

(11) **EP 0 661 944 B1**
(45) Veröffentlichungstag und Bekanntmachung des Hinweises auf die Patenterteilung: **15.05.1996**
(21) Anmeldenummer: 93918774.6
(22) Anmeldetag: 16.09.1993
(51) Int. Cl.: A47K 11/02

(54) **VERSCHLIESSBARER BEHÄLTER FÜR EINE TROCKENTOILETTE SOWIE TROCKENTOILETTE**
SEALABLE CONTAINER FOR A DRY TOILET, AND A DRY TOILET USING SUCH A CONTAINER
RECIPIENT A FERMETURE HERMETIQUE POUR WC A SEC, ET WC A SEC UTILISANT CE RECIPIENT

(30) Priorität: 16.09.1992 AT 1845/92
(43) Veröffentlichungstag der Anmeldung: 12.07.1995
(73) Patentinhaber: ÖSTERREICHISCHE RAUMFAHRT- UND SYSTEMTECHNIK GESELLSCHAFT MBH, A-1040 Wien (AT)
(72) Erfinder: ARLOW, Manhard, A-2440 Gramatneusiedl (AT); MOLDOVAN, Adrian, A-1190 Wien (AT)
(74) Vertreter: Haffner, Thomas M., Dr.
(86) Internationale Anmeldenummer: AT9300144
(87) Internationale Veröffentlichungsnummer: WO9406337

(56) Entgegenhaltungen:
- EP-A- 0 433 793
- GB-A- 1 294 129

## Beschreibung

Die Erfindung bezieht sich auf eine Anordnung aus einem Behälter und einem Deckel zum Einsatz in eine Trockentoilette im Bereich des Toilettensitzes sowie eine Trockentoilette mit einer Anordnung aus einem Behälter und einem Deckel.

Trockentoiletten mit einem Sitz zur Verwendung mit einem verschließbaren Behälter sind beispielsweise der EP-A1 433 793 zu entnehmen. Der verschließbare Behälter dient zu der Aufnahme der Fäkalien, wobei der Behälter nach einem Stuhlgang in der Toilette geschlossen und aus dem Toilettensitz entnommen werden kann und verschlossen gelagert werden kann. Gegenüber flexiblen Beuteln als Behälter, wie sie beispielsweise aus der US-PS 3 495 278 bekannt wurden, sind verschließbare Behälter, wie sie der EP-A1 433 793 entnommen werden können, wesentlich stabiler und besser gegen Zerstörung gesichert. Wesentlich für eine hygienische Entsorgung ist aber, daß der Deckel hermetisch schließt, womit hohe Anforderung an die Maßgenauigkeit der Passung zwischen Behälter und Deckel und damit erhöhte Anforderungen an die Herstellung derartiger Deckel gestellt werden. Je nach Paßgenauigkeit des Behälterdeckels ergibt sich naturgemäß ein mehr oder minder leichtes Öffnen, was insbesondere beim Transport bei einem unbeabsichtigten Öffnen zu Hygieneproblemen führen kann.

Die Erfindung zielt nun darauf ab, eine Anordnung aus einem Behälter und einem Deckel zum Einsatz in eine Trockentoilette der eingangs genannten Art zu schaffen, wobei ein steriles Verschließen des Behälters nach seiner Verwendung in besonders einfacher Weise möglich wird, und welcher bei geringem Herstellungsaufwand und geringen Herstellungstoleranzen einen hermetischen Abschluß ermöglicht, welcher auch bei einem Transport nicht beeinträchtigt wird.

Zur Lösung der Aufgabe besteht die erfindungsgemäße Ausbildung des Behälters darin, daß der Behälter einen umlaufenden Schweißbord aufweist, der zum Verschließen des Behälters mit dem Rand des Deckels verschweißbar ist.

Durch den umlaufenden Schweißbord des Behälters wird die Möglichkeit geschaffen, eine Verschweißung mit dem Deckel vorzunehmen und nach einer derartigen Verschweißung ergibt sich ein stabiler und steril verschlossener Behälter, welcher auch ohne Gefahr einer Öffnung transportiert werden kann. Insbesondere in bezug auf die einander zugewandten Flächen des Behälters und des Deckels kann aufgrund der vorzunehmenden Schweißverbindung mit wesentlich größeren Toleranzen in der Herstellung gearbeitet werden, ohne daß die Dichtheit des Verschlußes nach dem Verschweißen beeinträchtigt wird.

In besonders vorteilhafter Weise ist die Anordnung dahingehend weitergebildet, daß der Deckel wenigstens ein über den Schweißbord vorragendes Betätigungsglied eines Schalters einer Schweißvorrichtung aufweist. Auf diese Weise wird es möglich, nach der Verwendung der Trockentoilette eine automatische Versiegelung des Behälters zur besonders einfachen Entsorgung ohne zusätzliche Hilfsmittel vorzunehmen, wodurch die Betriebssicherheit der Toilette wesentlich erhöht wird. Zum Herausnehmen des verschlossenen Behälters kann mit Vorteil der Deckel einen Haltegriff aufweisen, wobei weiters in besonders vorteilhafter Weise wenigstens eine Seitenwand des Behälters eine Skalierung, insbesondere eine volumetrische Skalierung, aufweist. Im Hinblick auf die dauerhafte und sichere Verschweißung, welche ein unbeabsichtigtes Öffnen des Deckels ohne Zerstörung der Schweißstelle nicht zuläßt, erlaubt eine derartige Skalierung nachträglich Aussagen über den Inhalt, ohne den Deckel öffnen zu müssen.

In besonders vorteilhafter Weise ist die Ausbildung so getroffen, daß der Behälter und/oder der Deckel wenigstens eine verschlossene, über Sollbruchstellen einstückig mit dem jeweils umgebenen Wandbereich verbundene Einstichöffnung aufweist, wodurch gleichfalls ohne Öffnen des Deckels entsprechende Proben entnommen werden können.

Zum Einsetzen in Trockentoiletten und zum besseren Zentrieren zum Zwecke der richtigen Position der Schweißnaht relativ zur Schweißeinrichtung ist mit Vorteil die Ausbildung so getroffen, daß der Behälter zum Boden konvergierende Wandteile aufweist, wobei mit Vorzug der Deckel in den Behälter eintauchende Zentrierungsfortsätze oder eine dem Behälterrand entsprechende Rippe aufweist. Prinzipiell ist hier keine exakte Zentrierung erforderlich und durch die konische Gestaltung des Behälters und die entsprechenden Zentrierungsfortsätze wird lediglich sichergestellt, daß sich Schweißbord und über den Schweißbord überstehender Rand des Deckels im Bereich der Schweißvorrichtung befinden, wenn diese betätigt wird, und sich in diesem Bereich ausreichend überlappen.

Die erfindungsgemäße Trockentoilette für die Verwendung einer derartigen Anordnung, mit welcher inbesondere ein automatisches Schließen des Behälters ermöglicht werden soll, ist mit Vorteil dadurch gekennzeichnet, daß im Bereich des Toilettensitzes und/oder der Auflage für den Rand des Behälters eine Schweißeinrichtung angeordnet ist, welche sich über den gesamten Umfang des Schweißbordes erstreckt, und daß der Toilettensitz zum Auflegen des Deckels abnehmbar, insbesondere schwenkbar ist. Eine derartige Schweißeinrichtung kann von handelsüblichen Heizdrähten oder Heizleisten gebildet werden, wie sie beispielsweise zum Verschweißen von Folien bekannt sind. Lediglich die Heizleistung und die Breite der Heizleisten muß im vorliegenden Fall an das Material und die Wandstärke des Behälterrandes bzw. des Deckelrandes angepaßt werden, wobei naturgemäß die Geometrie der Anordnung der Heizelemente so getroffen sein muß, daß sich ein durchgehender dichter Abschluß durch eine insgesamt durchgehende Schweißnaht ergibt. Prinzipiell können derartige Heizelemente lediglich an einer Seite angeordnet sein, wobei die Heizleistung ausreichen muß, um auch das darunterliegende Material des jeweiligen anderen Behälterteiles, mit welchem verschweißt werden soll, auf Schweißtemperatur zu erhitzen. Bei einer derartigen Ausbildung muß naturgemäß besonderes Augenmerk dem Bereich der Ecken gewidmet werden, um auch in diesem Bereich Dichtheit zu gewährleisten.

Mit Vorteil ist die Schweißeinrichtung von langgestreckten Heizelementen gebildet, wobei in besonders vorteilhafter Weise jeweils zueinander parallele Heizelemente an einer Seite des Schweißbordes bzw. des Deckelrandes angeordnet sind. Bei einer derartigen Ausbildung eindimensionaler Heizelemente ergibt sich ohne besondere konstruktive Maßnahme ein Minimum an Problemen im Bereich von Ecken, daher eine Überlappung der Schweißnaht bzw. Elemente der Shweißeinrichtung ohne räumliche Behinderung durch die Heizelemente bzw. Heizleisten möglich wird. Im Bereich der Ecken liegen die Heizleisten an einander gegenüberliegenden Seiten, so daß hier keine besondere konstruktive Sorgfalt gewählt werden muß.

In besonders vorteilhafter Weise sind die Heizelemente in Richtung zur Schweißstelle federnd gelagert, wodurch ein sicheres Anliegen der Heizelemente an den zu verschweißenden Behälterteilen garantiert ist.

Um sicherzustellen, daß eine dichte Schweißverbindung erfolgt ist, und um den Schweißvorgang weiter zu automatisieren und gegen Fehlbedienungen zu sichern, ist mit Vorteil die Ausbildung so getroffen, daß der Schalter für die Betätigung der Schweißeinrichtung über ein Zeitglied mit einer Verriegelungseinrichtung für den schwenk- oder abnehmbaren Toilettensitz verbunden ist. Die Entnahme des Behälters wird auf diese Weise erst nach einer vorbestimmten Zeit ermöglicht, in welcher auch sichergestellt ist, daß die Schweißverbindung vollständig ist und die Schweißnaht wiederum abgekühlt ist.

Eine weitere Verbesserung der Betriebssicherheit kann dadurch erreicht werden, daß ein Sensor für die Temperatur und/oder die Energieaufnahme der Schweißeinrichtung angeordnet ist, welcher bei Unterschreiten einer Mindesttemperatur und/oder der Energieaufnahme nach Betätigung der Schweißeinrichtung ein Signal auslöst, wobei ein derartiges Alarmsystem ein akustische oder optisches Signal sein kann.

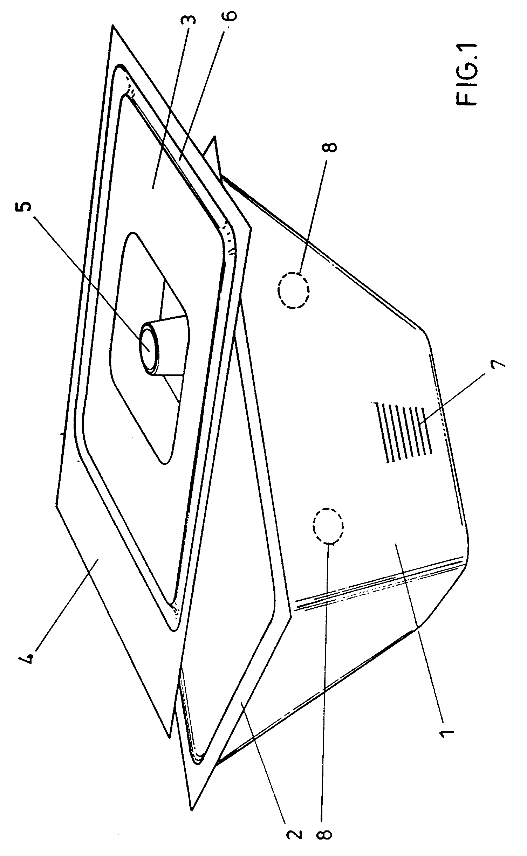

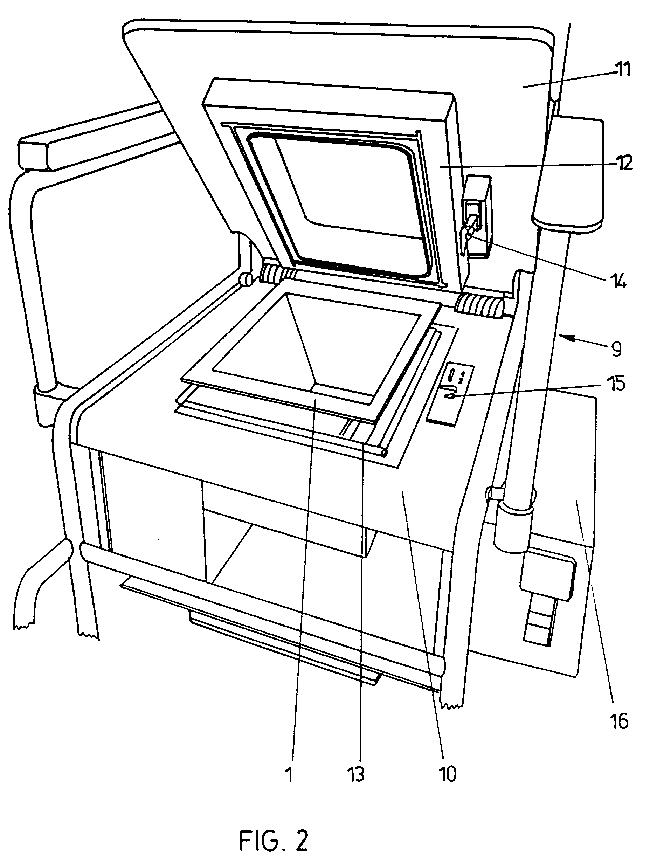

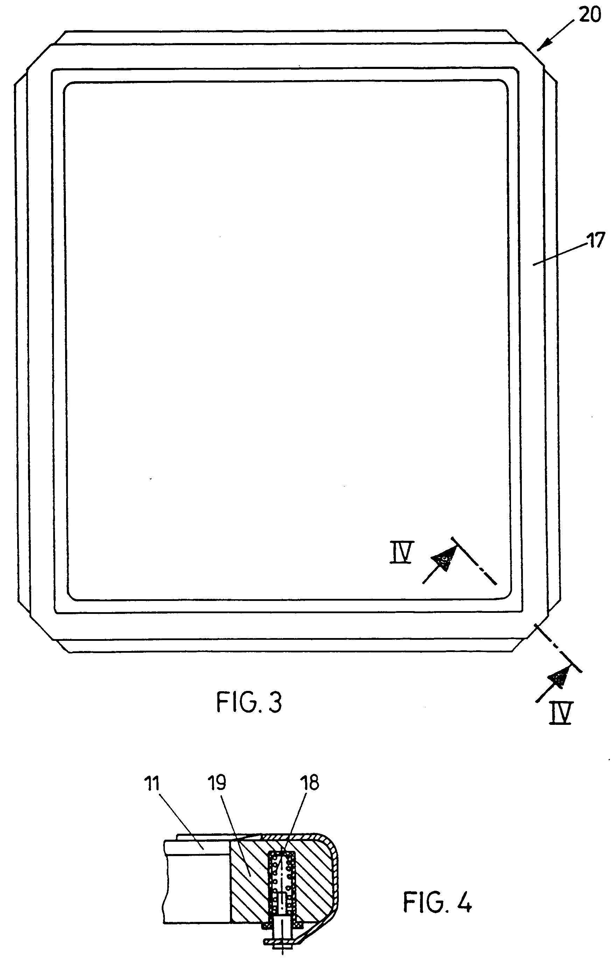

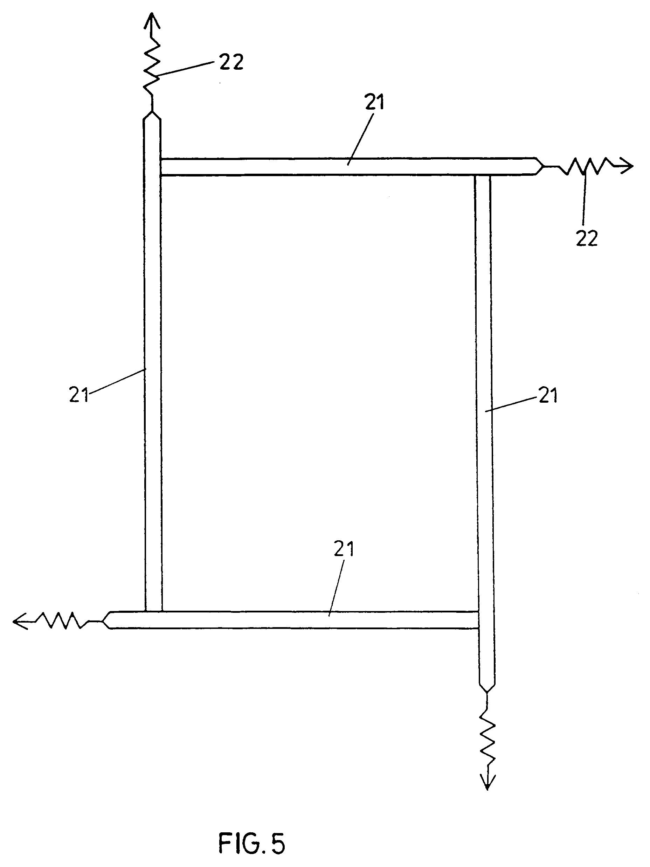

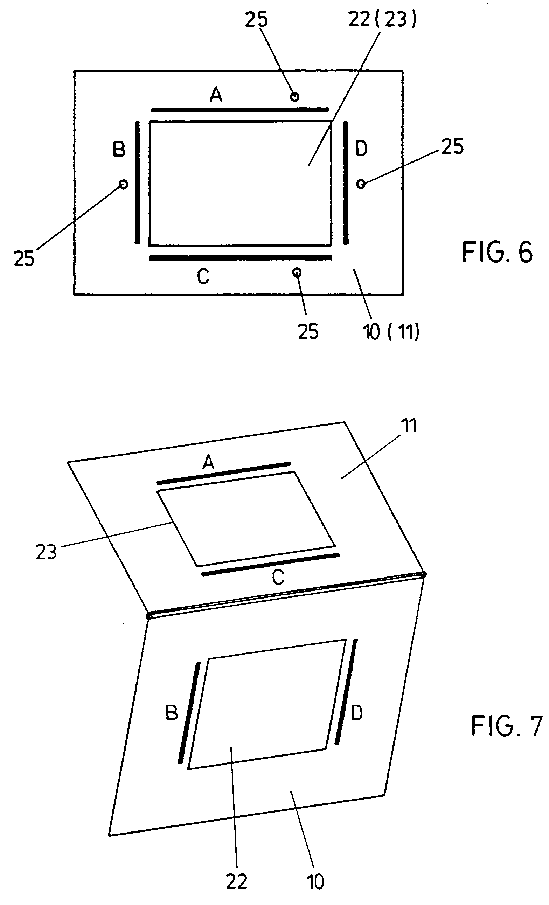

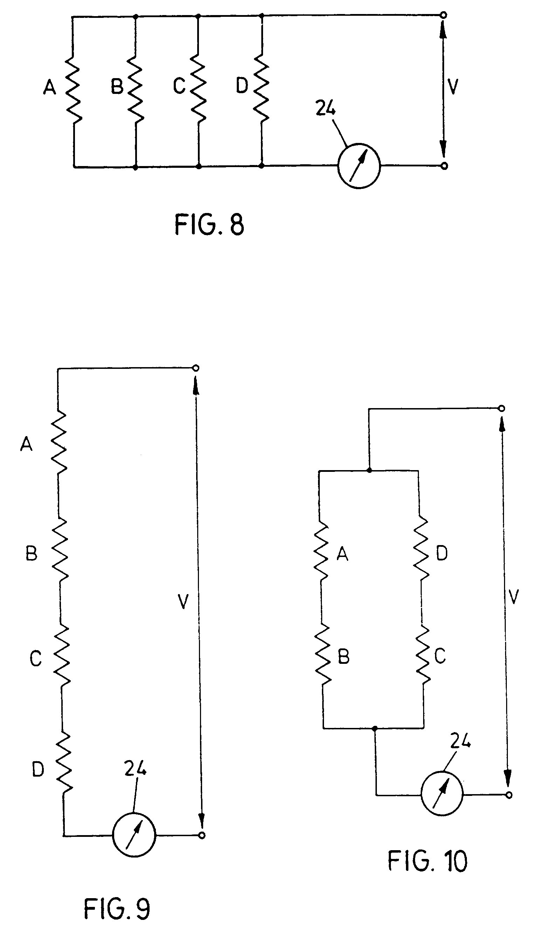

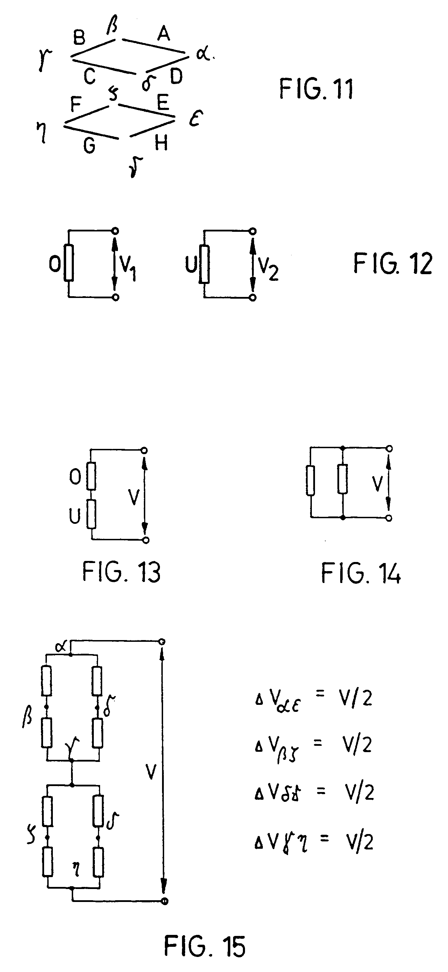

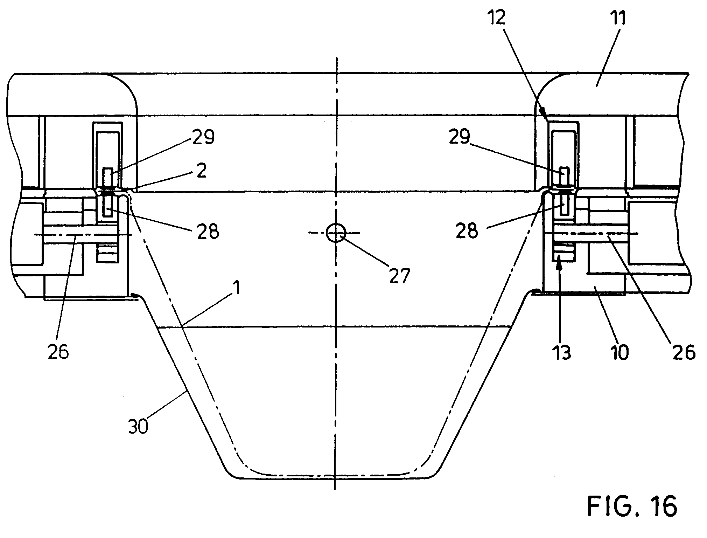

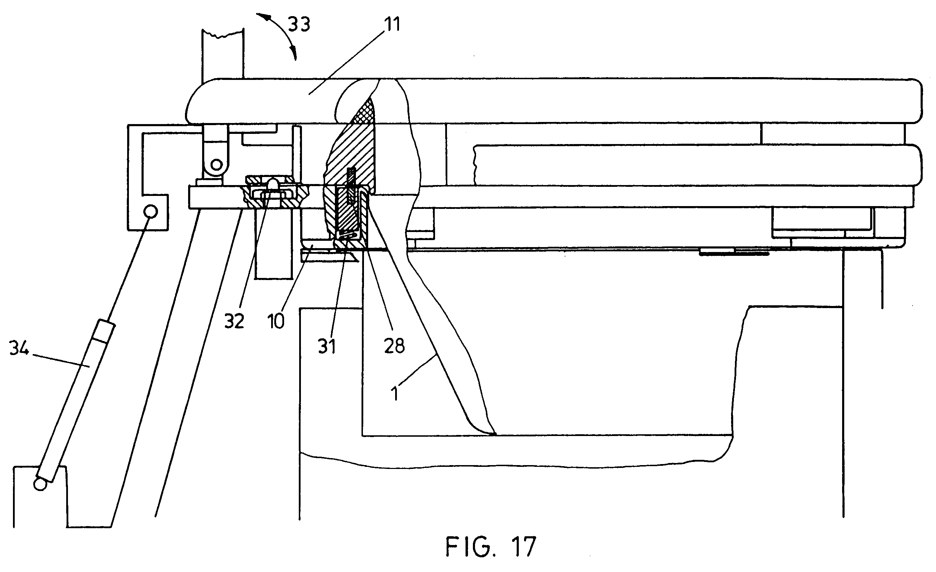

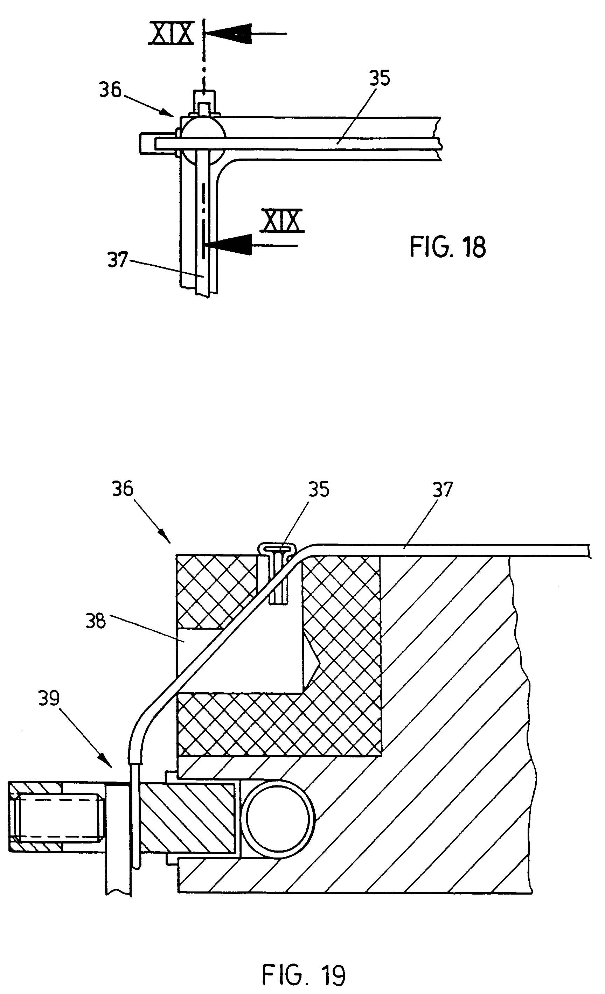

Die Erfindung wird nachfolgend an Hand von in der Zeichnung schematisch dargestellten Ausführungsbeispielen näher erläutert. In dieser zeigen Fig.1 eine perspektivische Darstellung eines erfindungsgemäßen Behälters und seines Deckels; Fig.2 eine perspektivische Darstellung einer erfindungsgemäßen Trockentoilette für die Verwendung eines verschließbaren erfindungsgemäßen Behälters gemäß Fig.1; Fig.3 eine schematische Darstellung einer Schweißeinrichtung mit einem durchgehenden Heiz- bzw. Verschweißelement; Fig.4 einen Schnitt nach der Linie IV-IV der Fig.3 in vergrößertem Maßstab und im Detail; Fig.5 eine schematische Darstellung einer abgewandelten Ausführungsform einer Schweißeinrichtung mit voneinander getrennten Heizelementen, welche insgesamt einen Schweißrahmen ausbilden; Fig.6 schematisch die Anordnung einer Schweißeinrichtung gemäß Fig.5 im Bereich der Auflage für den Rand des Behälters bzw. im Toilettensitz; Fig.7 eine abgewandelte Ausführungsform der Anordnung einer Schweißeinrichtung, teilweise im Bereich der Auflage des Behälters und teilweise im Bereich des Toilettensitzes; die Fig.8, 9 und 10 unterschiedliche Schaltungsmöglichkeiten für die Zufuhr elektrischer Energie zu den Schweißeinrichtungen gemäß den Fig.6 und 7; Fig.11 schematisch die Anordnung von Schweißeinrichtungen sowohl im Bereich der Auflage des Behälters als auch im Bereich des Toilettensitzes; die Fig.12, 13, 14 und 15 wiederum unterschiedliche Möglichkeiten der Zufuhr elektrischer Energie zu den Schweißeinrichtungen gemäß Fig.11; Fig.16 in vergrößertem Maßstab einen Schnitt durch eine erfindungsgemäße Trockentoilette bei aufgelegtem Toilettensitz, wobei die Anordnung von Schweißeinrichtungen sowohl im Bereich der Auflagefläche des Behälters als auch im Toilettensitz angedeutet ist; Fig.17 in einer zu Fig.16 ähnlichen Darstellung teilweise im Schnitt eine abgewandelte Ausführungsform der Lagerung und Anordnung von Schweißeinrichtungen in einer erfindungsgemäßen Trockentoilette; Fig.18 im Detail in einer Draufsicht die Anordnung von Heizelementen im Bereich einer Ecke des erfindungsgemäßen Behälter; und Fig.19 schematisch einen Schnitt nach der Linie XIX-XIX der Fig.18 in vergrößerter Darstellung.

In Fig.1 ist mit 1 ein Behälter für eine Trockentoilette bezeichnet, wobei der Behälter an seinem Rand einen umlaufenden Schweißbord 2 aufweist. Nach erfolgter Benützung des in einer Trockentoilette, wie sie beispielsweise in Fig.2 dargestellt ist, eingesetzten Behälters wird nach einem Hochklappen des Toilettensitzes der Deckel 3 auf den Behälter 1 bzw. dem Schweißbord 2 desselben aufgelegt. Der Deckel 3 weist jeweils einen Fortsatz bzw. Betätigungsglied 4 auf, welches nach erfolgtem Auflegen des Deckels und nochmaligem Schließen des Toilettensitzes ein automatisches Verschweißen des Deckels 3 mit dem Schweißbord 2 des Behälters ermöglicht, wie dies weiter unten näher dargestellt ist. Der Deckel 3 weist weiters einen Haltegriff 5 auf und ist mit zum Inneren des Behälters 1 ragenden Fortsätzen bzw. einer umlaufenden Rippe 6 versehen, wodurch eine exakte Positionierung des Deckels 3 am Behälter 1 ermöglicht wird. Der sich verjüngende Behälter weist weiters eine schematisch mit 7 angedeutete Skalierung sowie strichliert angedeutet Sollbruchstellen 8 zum Einführen von Sonden oder Geräten zur Überprüfung des Inhaltes des Behälters nach erfolgter Benützung auf.

Die in Fig.2 dargestellte und allgemein mit 9 bezeichnete Trockentoilette weist einen ersten Rahmenteil 10 auf, in welchem der Behälter 1 vor der Benützung einsetzbar ist. Zur Benützung der Toilette wird der inbesondere schwenkbare Toilettensitz 11 heruntergeklappt, worauf nach erfolgter Benützung und nach einem Hochklappen des Toilettensitzes 11 der in Fig.1 dargestellte Deckel 3 auf den Behälter 1 aufgesetzt wird und nach nochmaligem Verschwenken des Toilettensitzes über die schematisch ersichtliche Schweißeinrichtung 12 im Bereich des Toilettensitzes sowie eine ähnliche Schweißeinrichtung 13 im Bereich der Auflage des Behälters ein automatisches Verschweißen des Schweißbordes 2 des Behälters mit dem aufgelegten Deckel 3 erfolgt. Um ein Öffnen des Toilettensitzes während des Schweißvorganges zu verhindern, ist eine Verriegelungseinrichtung 14 am Toilettensitz vorgesehen, welche in entsprechende Bauteile 15 im Bereich des Rahmenteiles 10 eingreift. Eine elektrische Stromversorgung für die Schweißeinrichtungen 12 und 13, welche nachfolgend noch naher erläutert werden, ist mit 16 angedeutet.

Die in Fig.2 dargestellte Toilette kann beispielsweise in Form eines Rollstuhles oder ähnlichen Gerätes ausgebildet sein, wodurch ein universell und beispielsweise in Krankenanstalten an vielen Plätzen einsetzbare Trockentoilette geschaffen wird. Die einzige Voraussetzung betreffend der Toilette ist eine entsprechende Stromversorgung, wobei dies entweder über einen entsprechenden Netzanschluß oder durch Anordnung von entsprechenden Speichermedien für elektrische Energie sichergestellt werden kann.

Um die Schweißung von Thermoplastik, aus welchem der Behälter 1 besteht, erfolgreich durchzuführen, ist der Temperatur/Zeitverlauf des Schweißvorganges ein wesentlicher Parameter. Der Temperatur/Zeitverlauf einer linearen Schweißeinheit hängt prinzipiell von der an das Werkstück abgegebenen Leistung pro Längeneinheit des Schweißelementes ab. Um das sicherzustellen, muß die zugeführte Leistung, die Charakteristik des Heizelements (effektiver Querschnitt & spezifische Widerstand), die Warmeübergangsbedingung (Anpreßdruck) und der Wärmeverlust entlang der Schweißnaht innerhalb enger Toleranzen gehalten werden. In einem Schweißgerät, das lineare Schweißnähte herstellt, ist das kein Problem, da Unlinearitäten,die am Ende eines Schweißelementes auftreten können, entwurfmäßig außerhalb des Arbeitsbereiches angeordnet werden können.

Der große Ausdehnungskoeffizient eines typischen Schweißelementes gepaart mit den hohen Temperaturschwankungen einer typischen Anwendung bedingt, daß der Entwurf eines Schweißgerätes eine kontrollierte Ausdehnung ermöglichen soll ohne dadurch den Schweißvorgang zu beeinträchtigen. In einem Schweißgerät, das lineare Schweißnähte herstellt, wird das normalerweise dadurch erreicht, indem ein Ende des Schweißdrahtes fixiert ist und das andere Ende mittels einer Feder vorgespannt ist. Da der Schweißdraht sich innerhalb der isolierenden Hülle frei bewegen kann, ist eine kontrollierte Ausdehnung während des Heizvorganges gewährleistet. Da dieser Mechanismus am Ende eines Schweißelementes angeordnet werden muß, kann es bei einem einfachen, linearen Schweißgerät auch außerhalb des Arbeitsbereiches angeordnet werden.

Wenn man eine in sich geschlossene Schweißnaht mit den im Handel angebotenen linearen Schweißelementen herstellen will, wie z.B. eine quadratische, rechteckige oder mehreckige Schweißnaht, müssen an den Ecken spezielle Lösungen gefunden werden, so daß beide Anforderungen erfüllt werden, und damit eine durchgehende, homogene Schweißnaht auch an den Ecken in der gleichen Zeit erreicht wird als an den Seiten. Dazu muß sichergestellt werden, daß sich die abgegebenen thermischen Leistungen der zwei Elemente an den Ecken nicht summieren, keine Lücke zwischen den Elementen einen "kalten Steg" verursacht und die Schweißebene sich nicht an der Ecke ändert, was den Anpreßdruck und damit die thermischen Übergangsbedingungen zum Schweißgut ändern würde.

In den Fig.3 und 4 ist ein durchgehendes Schweißelement 17 aus Walzblechen geeigneter Legierungen dargestellt, welches beispielsweise auch im Toilettensitz 11 über Federn 18 nachgiebig gelagert ist. Die isolierende Hülle muß hiebei eine Ausdehnung in zwei Richtungen gestatten, wie dies in Fig.3 schematisch in den Eckbereichen 20 angedeutet ist. Die Zeit/Temperaturverlaufsanforderung wird durch die entsprechende Gestaltung der Ecken 20 unter Berücksichtigung der Stromdichte gewährleistet.

In Fig.5 ist schematisch eine abgewandelte Ausführungsform einer Schweißeinrichtung dargestellt, wobei lineare Heizelemente 21 insgesamt einen in sich geschlossenen Schweißrahmen bzw. eine in sich geschlossene Schweißeinrichtung ausbilden, wobei die Ausdehnung der Schweißelemente bei ansteigender Temperatur durch schematisch angedeutete Einrichtungen 22 aufgenommen wird.

In den Fig.6 und 7 ist die Anordnung von mehreren Schweißelementen zur Ausbildung einer geschlossenen Schweißnaht angedeutet. Dabei können die Schweißelemente entweder in der Auflage 10 bzw. im Toilettensitz 11 nebeneinander angeordnet sein, wobei die unterschiedlichen Schweißelemente bei Ausbildung einer aus vier Elementen bestehenden Schweißeinrichtung mit A, B, C, D bezeichnet sind. Bei der in Fig.7 dargestellten Ausführungsform sind jeweils an zueinander parallelen Seiten eines viereckigen Behälters angeordnete Schweißelemente einerseits im Auflagerbauteil 10 der Trockentoilette gemäß Fig.2 und andererseits im Toilettensitz 11 angeordnet. Dabei ist in den Fig.6 und 7 mit 22 bzw. 23 die Öffnung im Auflagerteil 10 bzw. im Toilettensitz 11 angedeutet.

Bei Annahme einer Schweißeinrichtung mit vier Heizelementen, wie dies in den Fig.6 und 7 dargestellt ist, ergeben sich im wesentlichen drei Verbindungsmöglichkeiten der einzelnen Elemente A,B,C,D zur Zufuhr elektrischer Energie, wobei in Fig.8 eine Parallelschaltung, in Fig.9 eine Serienschaltung und in Fig.10 eine parallele Serienschaltung dargestellt ist Im Bereich der Stromzufuhr ist hiebei jeweils zusätzlich jeweils noch ein Meßgerät 24 zur Feststellung der abgegebenen Leistung angedeutet, um eine dichte Verschweißung des Behälters mit dem Deckel jeweils sicherzustellen. Daneben können im Bereich der Heizelemente zusätzliche Temperatursensoren vorgesehen sein, wie dies in Fig.6 schematisch mit 25 angedeutet ist. Die Sensoren 24 und 25 sind hiebei in an sich bekannter Weise mit einer entsprechenden Auswertelogik verbunden, wobei bei Unterschreiten von vorgegebenen Grenzwerten für die Temperatur und/oder Leistungsaufnahme eine Anzeige dahingehend erfolgt, daß die Verschweißung nicht ordnungsgemäß durchgeführt wurde.

Prinzipiell ist eine einseitige sowie eine doppelseitige Verschweißung zweier Teile, d.h. des Schweißbordes 2 des Behälters 1 und des Deckels 3 denkbar und möglich. Die einseitige Verschweißung ist hiebei im allgemeinen konstruktiv einfacher und weist jedoch den Nachteil auf, daß die Schweißzeit länger bemessen sein muß und daß die unsymetrische Erzeugung der Schweißnaht an lediglich einem der zwei miteinander zu verschweißenden Bauteile einer kritischer Kontrolle bedarf, um die zum Teil sehr hohen Anforderungen in bezug auf Hygiene und Sterilität zu erfüllen.

In Fig.11 ist schematisch eine Schweißeinrichtung angedeutet, wobei sowohl in dem Toilettensitz als auch in dem Auflagerbau der Toilette gemäß Fig.2 eine Schweißeinrichtung vorgesehen ist, welche bei dem gezeigten Ausführungsbeispiel jeweils aus vier einzelnen Heizelementen entsprechend dem Außenumfang des zu verschließende Behälters besteht. In den Fig.12 bis 15 sind wiederum unterschiedliche Schaltungsmöglichkeiten dargestellt, wobei Fig.12 eine individuelle Anspeisung der zwei Schweißeinrichtungen, Fig.13 eine Serien- und Fig.14 eine Parallelanspeisung der Schweißeinrichtungen darstellt. Gemaß der in Fig.15 dargestellten Steuerung sind die obere und die untere Schweißeinrichtung seriell miteinander in einer derartigen Weise verbunden, um überall zwischen den beiden Schweißeinrichtungen die Differentialspannung konstant auf die halbe Zufuhrspannung zu beschränken.

In Fig.16 ist in einer vergrößerten Schnittdarstellung eine Anordnung dargestellt, wobei sowohl im Toilettensitz 11 als auch im Auflagerbauteil 10 wiederum allgemein mit 12 und 13 bezeichnete Schweißelemente angeordnet sind. Die im Auflagerbauteil 10 angeordneten Schweißelemente 13 sind hiebei kardanisch gelagert, wie dies durch die Wellenstummel 26 und 27 angedeutet ist. Durch eine derartige Lage ergibt sich die Möglichkeit, beim Schließen des Toilettensitzes jeweils eine satte Auflage der mit 28 und 29 bezeichneten Heizelemente zu ermöglichen. Bei der Darstellung gemäß Fig.16 ist hiebei der Deckel auf den schematisch angedeuteten Behälter 1 noch nicht aufgesetzt, so daß zwischen den Schweißelementen 28 und 29 sich jeweils nur der Schweißbord 2 des Behälters 1 befindet. Es ist ersichtlich, daß im Auflagerbauteil 10 eine Sicherheitswanne 30 angeordnet ist, deren Innenkontur im wesentlichen der konischen verlaufenden Kontur des Behälters 1 entspricht. Diese Sicherheitswanne 30 dient insbesondere dazu, bei Nichtvorhandensein bzw. schadhaften Behältern weitgehend hygienische Bedingungen aufrecht zu erhalten.

Bei der in Fig.17 dargestellten abgewandelten Ausführungsform sind zumindest die im Auflagerbauteil 10 gelagerten Heizelemente 28 durch Federn 31 beaufschlagt, so daß sich auch hier wiederum eine gute Auflage beim Verschweißen ergibt. Auch in dieser Darstellung ist lediglich der Behälter 1 eingesetzt und der Deckel noch nicht aufgesetzt. Wie aus Fig.1 ersichtlich, weist der Deckel einerseits einen Fortsatz bzw. ein Betätigungsglied 4 auf, welches bei aufgesetztem Deckel mit einem Schalter zusammenwirkt, dessen bewegbares Schalterelement 32 in Fig.17 näher dargestellt ist. Nach einem Verschwenken des Toilettensitzes im Sinne des Doppelpfeiles 33 und bei aufgesetztem Deckel 3 auf den Behälter 1 erfolgt somit bei einem Absenken des Toilettensitzes über den Fortsatz 4 des Deckels ein Niederdrücken des Schalterkopfes 32, wodurch die Schweißeinrichtung aktiviert werden. Mit dem Schalter 32 bzw. mit der Aktivierung der Schweißeinrichtungen ist weiters die in Fig.2 bereits dargestellte Verriegelungseinrichtung 14 gekoppelt, so daß während der Schweißvorganges und einer daran anschließenden Abkühlzeit der Toilettensitz auch nicht irrtümlich geöffnet werden kann.

Für eine leichtere Betätigung des Toilettensitzes 11 ist in Fig.17 im Schwenkmechanismus eine Gasdruckfeder 34 angedeutet.

Bei einer Ausführungsform, bei welcher in wenigstens einer Ebene ein aus einzelnen Heizelementen gebildeter Schweißrahmen angeordnet ist, muß das Problem der Versorgung der Ecken, wie dies oben (Fig. 6, 7) bereits angedeutet wurde, entsprechend gelöst werden.

Bei der Ausführungsform gemäß den Fig.18 und 19 ist vorgesehen, daß ein Heizelement 35 sich über den Eckbereich 36 hinaus erstreckt, während das zweite Heizelement 37 unmittelbar im Eckbereich unter dem ersten Heizelement 35 durch eine entsprechende Ausnehmung 38 hindurchgeführt wird, wie dies in Fig.19 näher dargestellt ist. Die Kontaktierung des zweiten Heizelementes 37 ist in Fig.19 schematisch mit 39 angedeutet. Durch eine derartige Ausbildung ist sichergestellt, daß eine durchgehende Schweißnaht erzielbar ist, wobei es im Bereich der Ecke nicht zu einer übermäßigen Einbringung von Heizenergie kommt, wodurch der Behälter bzw. der Deckel sonst zerstört werden könnte.

Wie bereits angedeutet, kann die Überwachung des Schweißvorganges mit teils entsprechend angeordneter Temperaturfühler, differentialer Strom- bzw. Spannungsmessung oder der Überwachung absoluter Strom- bzw. Spannungswerte geschehen. Eine Kombination von entsprechendem Material der einzelnen Heiz- bzw. Schweißelemente mit einem stark ausgeprägten positiven Widerstands-Temperaturkoeffizienten und kontrollierter Schweißzeit, stellt eine Steueralternative zu einer Prozeßregelung dar, welche entsprechende Resultate liefern kann.

## Patentansprüche

1. Anordnung aus einem Behälter (1) und einem Deckel (3) zum Einsatz in eine Trockentoilette im Bereich des Toilettensitzes, dadurch gekennzeichnet, daß der Behälter (1) einen umlaufenden Schweißbord (2) aufweist, der zum Verschließen des Behälters (1) mit dem Rand des Deckels (3) verschweißbar ist.

2. Anordnung nach Anspruch 1, dadurch gekennzeichnet, daß der Deckel (3) wenigstens ein über den Schweißbord (2) vorragendes Betätigungsglied (4) eines Schalters einer Schweißvorrichtung (13) aufweist.

3. Anordnung nach Anspruch 1 oder 2, dadurch gekennzeichnet, daß der Deckel (3) einen Haltegriff (5) aufweist.

4. Anordnung nach Anspruch 1, 2 oder 3, dadurch gekennzeichnet, daß wenigstens eine Seitenwand des Behälters (1) eine Skalierung (7), insbesondere eine volumetrische Skalierung, aufweist.

5. Anordnung nach einem der Ansprüche 1 bis 4, dadurch gekennzeichnet, daß der Behälter (1) und/oder der Deckel (3) wenigstens eine verschlossene, über Sollbruchstellen (8) einstückig mit dem jeweils umgebenen Wandbereich verbundene Einstichöffnung aufweist.

6. Anordnung nach einem der Ansprüche 1 bis 5, dadurch gekennzeichnet, daß der Behälter (1) zum Boden konvergierende Wandteile aufweist.

7. Anordnung nach einem der Ansprüche 1 bis 6, dadurch gekennzeichnet, daß der Deckel (3) in den Behälter (1) eintauchende Zentrierungsfortsätze oder eine dem Behälterrand entsprechende Rippe (6) aufweist.

8. Trockentoilette mit einer Anordnung aus einem Behälter (1) und einem Deckel (3) nach einem der Ansprüche 1 bis 7, dadurch gekennzeichnet, daß im Bereich des Toilettensitzes (11) und/oder der Auflage (10) für den Rand des Behälters (1) eine Schweißeinrichtung (13) angeordnet ist, welche sich über den gesamten Umfang des Schweißbordes (2) erstreckt, und daß der Toilettensitz (11) zum Auflegen des Deckels (3) abnehmbar, insbesondere schwenkbar ist.

9. Trockentoilette nach Anspruch 8, dadurch gekennzeichnet, daß die Schweißeinrichtung (13) von langgestreckten Heizelementen gebildet ist.

10. Trockentoilette nach Anspruch 8 oder 9, dadurch gekennzeichnet, daß jeweils zueinander parallele Heizelemente (21) an einer Seite des Schweißbordes (2) bzw. des Deckelrandes angeordnet sind.

11. Trockentoilette nach Anspruch 8, 9 oder 10, dadurch gekennzeichnet, daß die Heizelemente (12, 13) in Richtung zur Schweißstelle (18) federnd gelagert sind.

12. Trockentoilette nach einem der Ansprüche 8 bis 11, dadurch gekennzeichnet, daß der Schalter für die Betätigung der Schweißeinrichtung (13) über ein Zeitglied mit einer Verriegelungseinrichtung (14) für den schwenk- oder abnehmbaren Toilettensitz verbunden ist.

13. Trockentoilette nach einem der Ansprüche 8 bis 12, dadurch gekennzeichnet, daß ein Sensor (24, 25) für die Temperatur und/oder die Energieaufnahme der Schweißeinrichtung angeordnet ist, welcher bei Unterschreiten einer Mindesttemperatur und/oder der Energieaufnahme nach Betätigung der Schweißeinrichtung (13) ein Signal auslöst.

## Claims

1. An arrangement comprised of a container (1) and a lid (3) and intended to be used in a dry toilet in the region of the toilet seat, characterized in that the container (1) comprises a peripheral welding rim (2) capable of being welded with the edge of the lid (3) for closing the container (1).

2. An arrangement according to claim 1, characterized in that the lid (3) comprises at least one actuating member (4) of a switch of a welding equipment (13), projecting beyond the welding rim (2).

3. An arrangement according to claim 1 or 2, characterized in that the lid (3) comprises a handle (5).

4. An arrangement according to claim 1, 2 or 3, characterized in that at least one side wall of the container (1) includes a scaling (7), in particular a volumetric scaling.

5. An arrangement according to any one of claims 1 to 4, characterized in that the container (1) and/or the lid (3) comprise(s) at least one closed insertion opening connected via predetermined breaking points (8) with the respective one of the surrounding wall regions.

6. An arrangement according to any one of claims 1 to 5, characterized in that the container (1) comprises wall parts converging towards the bottom.

7. An arrangement according to any one of claims 1 to 6, characterized in that the lid (3) comprises centering projections extending into the container (1) or a rib (6) corresponding to the edge of the container.

8. A dry toilet comprising an arrangement comprised of a container (1) and a lid (3) according to any one of claims 1 to 7, characterized in that a welding equipment (13) extending about the entire periphery of the welding rim (2) is arranged in the region of the toilet seat (11) and/or the supporting means (10) for the edge of the container (1), and that the toilet seat (11) is detachable, in particular pivotable, for placing the lid (3) thereon.

9. A dry toilet according to claim 8, characterized in that the welding equipment (13) is comprised of elongate heating elements.

10. A dry toilet according to claim 8 or 9, characterized in that parallel heating elements (21) are each arranged on one side of the welding rim (2), or of the edge of the lid, respectively.

11. A dry toilet according to claim 8, 9 or 10, characterized in that the heating elements (12, 13) are resiliently mounted in the direction towards the welding site (18).

12. A dry toilet according to any one of claims 8 to 10, characterized in that the switch for actuating the welding equipment (13) is connected with a blocking means (14) for the pivotable or detachable toilet seat via a time function element.

13. A dry toilet according to any one of claims 8 to 12, characterized in that a sensor (24, 25) is provided for detecting the temperature and/or the energy consumption of the welding equipment, said sensor triggering a signal upon falling short of a minimum temperature and/or the energy consumption after actuation of the welding equipment (13).

## Revendications

1. Dispositif constitué d'un récipient (1) et d'un couvercle (3) destiné à être employé dans un WC à sec au niveau du siège, ***caractérisé en ce que*** le récipient (1) présente une lisière de soudure périphérique (2), qui se soude au bord du couvercle (3) pour fermer le récipient (1).

2. Dispositif selon la Revendication 1, ***caractérisé en ce que*** le couvercle (3) présente au moins un élément d'actionnement (4), dépassant de la lisière de soudure (2), d'un commutateur d'un dispositif de fermeture (13).

3. Dispositif selon la Revendication 1 ou 2, ***caractérisé en ce que*** le couvercle (3) présente une poignée (5).

4. Dispositif selon la Revendication 1, 2 ou 3, ***caractérisé en ce qu***'au moins une paroi latérale du récipient (1) présente une graduation (7), en particulier une graduation volumétrique.

5. Dispositif selon l'une des Revendications 1 à 4, ***caractérisé en ce que*** le récipient (1) et/ou le couvercle (3) présente au moins une ouverture d'enfoncement fermée reliée d'un seul tenant, par l'intermédiaire de points de rupture imposée (8), à la zone de paroi adjacente respective.

6. Dispositif selon l'une des Revendications 1 à 5, ***caractérisé en ce que*** le récipient (1) présente des parties de paroi convergeant en direction du sol.

7. Dispositif selon l'une des Revendications 1 à 6, ***caractérisé en ce que*** le couvercle (3) présente des prolongements de centrage s'enfonçant dans le récipient (1), ou une membrure (6) correspondant au bord du récipient.

8. WC à sec comprenant un dispositif constitué d'un récipient (1) et d'un couvercle (3) selon l'une des Revendications 1 à 7, ***caractérisé en ce qu***'au niveau du siège de WC (11) et/ou de l'appui (10) pour le bord du récipient (1), un dispositif de fermeture (13) est prévu, qui s'étend sur toute la périphérie de la lisière de soudure (2), et en ce que le siège de WC (11) peut être ôté, en particulier pivoté, pour mettre en place le couvercle (3).

9. WC à sec selon la Revendication 8, ***caractérisé en ce que*** le dispositif de soudure (13) est formé d'éléments chauffants allongés.

10. WC à sec selon la Revendication 8 ou 9, ***caractérisé en ce que*** des éléments chauffants (21) parallèles les uns aux autres sont placés sur un côté de la lisière de soudure (2) ou du bord du couvercle.

11. WC à sec selon l'une des Revendications 8, 9 ou 10, ***caractérisé en ce que*** les éléments chauffants (12, 13) sont montés sur ressorts dans la diretion de la zone de soudure (18).

12. WC à sec selon l'une des Revendications 8 à 11, ***caractérisé en ce que*** le commutateur d'actionnement du dispositif de fermeture (13) est relié par l'intermédiaire d'un organe de temporisation à un dispositif de verrouillage (14) du siège de toilette pivotant ou amovible.

13. WC à sec selon l'une des Revendications 8 à 12, ***caractérisé en ce qu***'un capteur (24, 25) de température et/ou d'absorption d'énergie du dispositif de soudure est prévu, lequel déclenche un signal en cas de dépassement vers le bas d'une température minimale et/ou de l'absorption d'énergie après actionnement du dispositif de soudure (13).
